# EUROPEAN PATENT SPECIFICATION

(11) **EP 2 497 018 B1**
(45) Date of publication and mention of the grant of the patent: **26.12.2018**
(21) Application number: 10827959.7
(22) Date of filing: 02.11.2010
(51) Int. Cl.: G06Q 10/10, H04L 12/58

(54) **METHOD AND APPARATUS FOR ORGANIZING MESSAGES AND ATTACHMENTS AS A CONVERSATION**
VERFAHREN UND VORRICHTUNG ZUR ORGANISATION VON NACHRICHTEN UND ANHÄNGEN ALS KONVERSATION
PROCEDE ET APPAREIL POUR ORGANISER DES MESSAGES ET DES PIECES JOINTES COMME CONVERSATION

(30) Priority: 03.11.2009 US 257606 P
(43) Date of publication of application: 12.09.2012
(73) Proprietor: Nokia Technologies Oy, 02610 Espoo (FI)
(72) Inventor: COLLINS, Timothy, FI-00100 Helsinki (FI)
(74) Representative: Ruuskanen, Juha-Pekka
(86) International application number: PCT/FI2010/050878
(87) International publication number: WO 2011/055013

(56) References cited:
- EP-A1- 1 662 429
- EP-A2- 1 643 426
- EP-A2- 1 643 426
- WO-A2-2008/011629
- US-A1- 2003 101 065
- US-A1- 2005 114 781

## Description

### BACKGROUND

Service providers and device manufacturers are continually challenged to deliver value and convenience to consumers by, for example, providing compelling network services and advancing the underlying technologies. One area of interest has been the development of services and technologies for improving the functionality of messaging services (e.g., e-mails, text messaging, multimedia messaging, instant messaging, voice communications, etc.). In particular, service providers and device manufacturers face significant technical challenges in managing the increasing volume of messages created and transmitted over a growing variety of available messaging services. For example, it is not uncommon for users to engage in multiple simultaneous or contemporaneous messaging conversations that can span several different modes of communications and include any number of accompanying digital content, files, attachments, etc.

Therefore, there is a need for an approach for efficiently organizing, storing, and managing related messages and content.

International application publication number WO 2008/011629 A2 relates to, when an electronic message with a voicemail attachment is received, an audio player object and a reply by chat object are displayed simultaneously along with the electronic message.

European patent application number EP 1,643,426 A2 relates to a method and computer-readable medium for providing navigation between attachments to electronic mail messages.

United States patent application publication number US 2005/0114781 A1 relates to providing a user interface that includes a first column for chronologically displaying a set of messages (objects) in a conversation, and a second column for displaying a brank of messages (objects) corresponding to a message (object) selected in the first column.

### SUMMARY

The present invention is defined by the appended independent claims. Certain more specific aspects are defined by the appended dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of organizing messages and attachments as a conversation, according to one embodiment;
FIG. 2 is a diagram of components of a conversation manager, according to one embodiment;
FIG. 3 is a diagram of a flowchart of a process for organizing messages and attachments as a conversation, according to one embodiment;
FIG. 4 is a diagram of a flowchart of a process for downloading attachments associated with messages organized as a conversation, according to one embodiment;
FIG. 5 is a diagram of a user interface for displaying a conversation object, according to one embodiment;
FIGs. 6A-6C are diagrams of user interfaces for managing attachments and content associated with messages organized as a conversation, according to various embodiments;
FIG. 7 is a diagram of hardware that can be used to implement an embodiment of the invention;
FIG. 8 is a diagram of a chip set that can be used to implement an embodiment of the invention; and
FIG. 9 is a diagram of a mobile terminal (e.g., a handset) that can be used to implement an embodiment of the invention.

### DESCRIPTION OF SOME EMBODIMENTS

Examples of a method, apparatus, and computer program for organizing messages and attachments as a conversation are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

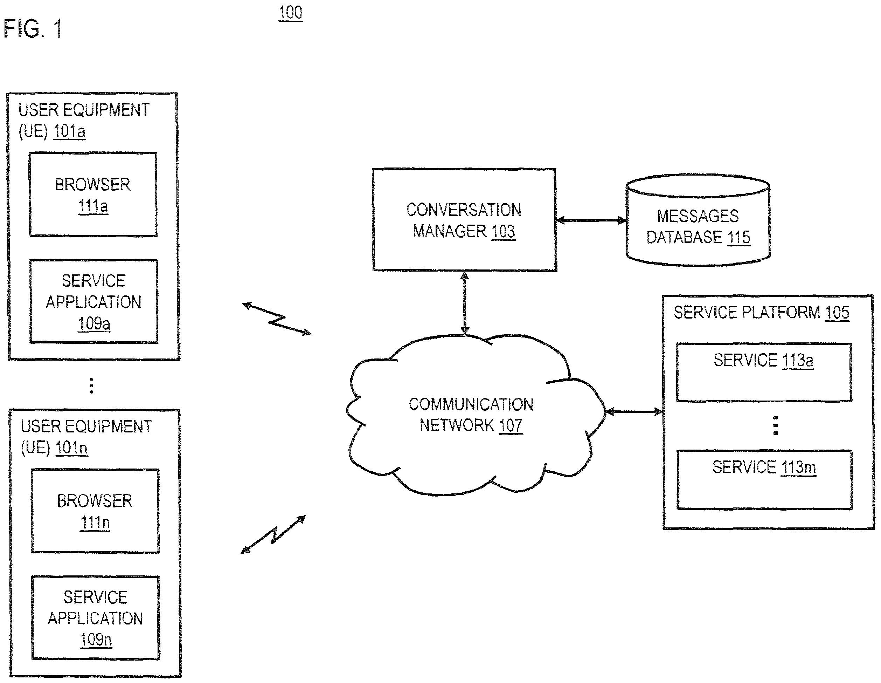

FIG. 1 is a diagram of a system capable of interacting with a content object, according to one embodiment. As discussed previously, users are becoming increasingly sophisticated in the forms of communications used to conduct even routine daily conversations. By way of example, a conversation or message thread encompasses a sequence of messages exchanged between users to discuss, for instance, a common idea or subject. It is also contemplated that messages that constitute a conversation may also be related by other criteria such as time, participants, location, and the like. Moreover, the forms of communications (e.g., e-mail, text messaging, instant messaging, multimedia messaging, etc.) allow for an exchange of associated rich content (e.g., graphics, music, etc.) and other attachments (e.g., documents, files, web links, etc.). To add even more complexity, the forms of communications may change as the conversation develops. For example, a conversation between two users may start with an instant messaging session which is then followed up with an exchange of emails. In addition, the participants may change and the conversation may branch off to side conversations with the different participants over time. For example, a conversation starts between two users as above. A new user joins the conversation but finds a common interest with one of the original participants and starts a new branch of the conversation related only. In the meantime, the main branch of the conversation involving all three users continues. Accordingly, users often find it difficult to record or follow the conversations as they move among the various modes of communications and as new participants join and leave the conversation.

Traditionally, messaging services have been limited to displaying conversations, threads, or other relationships among only those messages specific to the service. For example, an email service or application displays only those parts of a conversation occurring within the email service. If part of the conversation occurs over text messaging, the email application likely would have no record or information on that portion of the conversation. Even if a traditional messaging application were to provide for tracking a conversation over multiple modes of communications, it may still be difficult to maintain control over the exchange of any attachments or other content that may be associated with the messages.

To address this problem, the system 100 of FIG. 1 introduces the capability to organize messages and related content and attachments into one or more conversation objects to enable a user to record, search, view, and playback conversations that occur over one or more modes of communications. As used herein, a conversation object is a common object model for information related to messages and content of a conversation. The conversation object supports a variety of modes of communication traditionally corresponding to separate and distinct application types (e.g., an email application, an instant messaging application, a text messaging application, a social network application, and the like). In other words, the conversation object is an encapsulation or record of messages and associated attachments and content that can be manipulated or otherwise accessed as a single entity. In this way, the system 100 of FIG. 1 advantageously enables the user to easily view or access the group of messages as a single logical entity rather than separate threads of different messaging services. The conversation object also serves as a central index to all content and attachments (e.g., document files, multimedia files, graphics, audio, etc.) exchanged as part of the conversation.

It is noted that although several embodiments of the invention are discussed with respect to a user initiating or requesting the grouping of messages and associated attachments into a conversation object, it is recognized by one of ordinary skill in the art that the embodiments of the inventions have applicability to any entity (e.g., both users and non-users of the conversation object) for initiating the creation of the conversation object. For example, a service provider, network operator, content provider, and the like may create a conversation object for users that include attachments or content that may be of interest to the users. By way of example, a service provider may create a conversation object as a way of communicating to all or some groups of users (e.g., communicating service updates, new functionalities, marketing information, etc.). Also, a service, service provider, or other authorized entity may create a conversation object on behalf of the user, for instance, based on the user's usage behavior or other pattern of activity.

As shown in FIG. 1, the system 100 comprises user equipment 101a-101n (UEs) (also collectively referred to as UEs 101) having connectivity to a conversation manager 103 and a service platform 105 via a communication network 107. In one embodiment, the conversation manager 103 facilitates the grouping of messages and content into a conversation object over, for example, predetermined a period of time. The conversation also facilitates the subsequent access and/or manipulation of the conversation object by service application 109a-109n (also collectively referred to as service applications 109) or a browser 111a-111n (e.g., a web browser) (also collectively referred to as browsers 111) executed by the UEs 101 or by one or more of the services 113a-113m (also collectively referred to as services 113) of the service platform 105. In one embodiment, the services 113 include the range of messaging services (e.g., email, instant messaging, text messaging, etc.) available over the communication network 107. The services 113 of the service platform 105 may also include a suite of services such as a location management service (e.g., a mapping service or navigation service), contact management service, social networking service, media content service (e.g., music service, video service, etc.) that rely on the messaging services or can be used with the messaging services. In another embodiment, the conversation manager 103 may operate a web server to facilitate access to and/or manipulation of the conversation object using a web browser 111 executed on one or more of the UEs 101. In this way, the UEs 101 need not execute a service application 109 to access the functions of the conversation manager 103.

In one embodiment, the conversation manager 103 generates a conversation object that includes messages or information of a plurality of application types (e.g., messaging application types) in which the information is developed or evolved over period of time. The conversation manager 113 stores the information in, for instance, the messages database 115. In addition or alternatively, the messages database 115 can reside on one or more nodes connected directly or indirectly to one or more of the services 113. In other embodiments, the messages database 115 resides on one or more nodes in the communication network 107. More specifically, the messages database 115 includes one or more processes and one or more data structures that store conversation objects, messages, attachments, content, and related information as well as data, configurations, user profiles, variables, conditions, and the like associated with operation of the conversation manager and/or the service applications. The conversation manager 103 may also direct the display of a user interface for interacting with the conversation object. In one embodiment, these interactions include playing back conversations stored in the conversation object, managing attachments, downloading attachments or content, authorizing access to requested attachments or content, and the like.

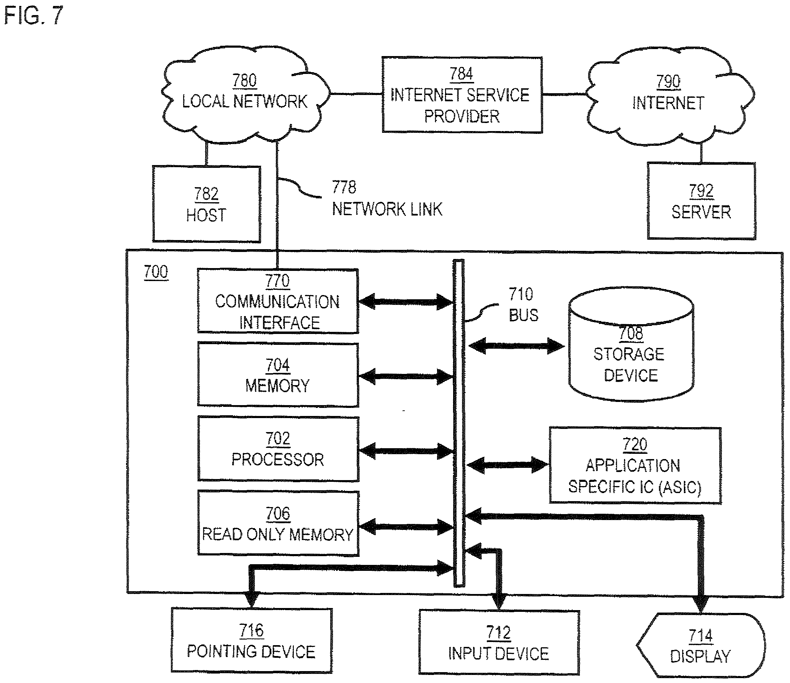

In one embodiment, the conversation manager 103 and the service platform 105 can be implemented via shared, partially shared, or different computer hardware (e.g., the hardware described with respect to FIG. 7).

By way of example, the communication network 107 of FIG. 1 includes one or more networks such as a data network (not shown), a wireless network (not shown), a telephony network (not shown), or any combination thereof. It is contemplated that the data network may be any local area network (LAN), metropolitan area network (MAN), wide area network (WAN), a public data network (e.g., the Internet), or any other suitable packet-switched network, such as a commercially owned, proprietary packet-switched network, e.g., a proprietary cable or fiber-optic network. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), satellite, mobile adhoc network (MANET), and the like.

The UEs 101 are any type of mobile terminal, fixed terminal, or portable terminal including a mobile handset, station, unit, device, multimedia tablet, multimedia computer, Internet node, communicator, desktop computer, laptop computer, Personal Digital Assistants (PDAs), or any combination thereof. It is also contemplated that the UE 101 can support any type of interface to the user (such as "wearable" circuitry, etc.). The UE 101 may also be equipped with one or more sensors (e.g., a global positioning satellite (GPS) sensor, accelerometer, light sensor, etc.) for use with the services or for supplementing the conversation objects.

By way of example, the UEs 101, the conversation manager 103, and the service platform 105 communicate with each other and other components of the communication network 107 using well known, new or still developing protocols. In this context, a protocol includes a set of rules defining how the network nodes within the communication network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application headers (layer 5, layer 6 and layer 7) as defined by the OSI Reference Model.

In one embodiment, the service application 109 and the conversation manager 103 interact according to a client-server model. It is noted that the client-server model of computer process interaction is widely known and used. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others. In one embodiment, the server is integrated as part of the client.

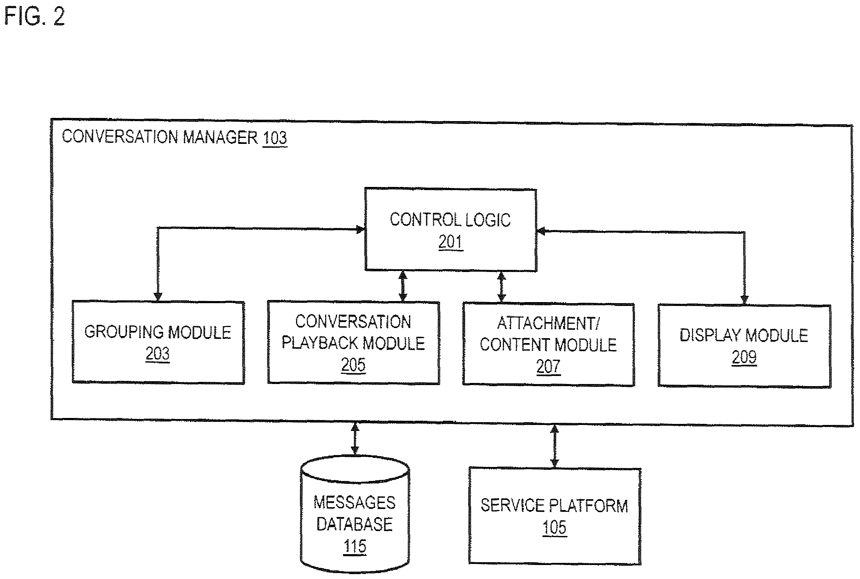

FIG. 2 is a diagram of components of conversation manager, according to one embodiment. By way of example, the conversation manager 103 includes one or more components for generating, sharing, and updating a conversation object. It is contemplated that the functions of these components may be combined in one or more components or performed by other components of equivalent functionality. In this embodiment, the conversation manager 103 includes at least a control logic 201 which executes at least one algorithm for executing functions of the conversation manager. For example, the control logic 201 interacts with the grouping module 203 to group messages in a conversation object that includes attachments, content, or a combination thereof associated with the grouped messages. In one embodiment, the grouping module 203 may operate automatically and group messages as they occur with respect to one or more users or subscribers to a conversation management service. In addition or alternatively, the grouping module 203 may group messages manually at the request of a user, a service, a service provider, a network operator, a content provider, or a combination thereof. The request to group the messages into a conversation object can be initiated via the service application or a via a web portal provided of the conversation manager 103 by initiating a command to create a new or update an existing conversation object. In one embodiment, access to any one of the messages included in the conversation object can also result in access to the entire conversation object. In this way, even if a user had access to only one message of the conversation object, the user would nonetheless have access to the entire conversation object or thread and/or the attachment/content manager for the conversation object.

Next, the control logic 201 interacts with the conversation playback module 205 to receive a request to view the conversation object. The conversation playback module 205 then retrieves at least one of the messages from the messages database and initiates playback of the requested object. In one embodiment, playback includes, for instance, displaying at least one of the messages and/or at least one of related attachments and content in a predetermined sequence. By way of example, the sequence may be based on a sequential order of the creation dates of the messages in the conversation object. It is contemplated that the user can view the content of the conversation object in a number ways including playing back the conversation one message at a time to clearly identify the specific message content and associated metadata (e.g., time, location, person, etc.). The user may also initiate playback of the conversation object in a forward or reverse direction (e.g., with respect to the time or sequence of the messages).

In one embodiment, the conversation object may include a conversation containing one or more branches of the conversation. For example, the branches of the conversation may be based on a subtopic of the main conversation or may involve different participants, locations, times, etc. from the main conversation. It is contemplated that the user, service provider, network operator, or combination thereof may specify any criteria for defining branches of a conversation. In this case, the user may specify the particular branch of the conversation to playback. In addition or alternatively, the conversation playback module may playback all branches or playback those branches of the conversation specific to the requesting user.

The conversation playback module 205 may also interact with the attachment/content module 207 to enable the user to view or access at least one of the attachments and/or content associated with the messages. The attachment/content module 207 provides unified access (e.g., via central index) to all attachments and content associated with the conversation object. The attachment/content module 207 determines and can give clear indication as to whether specific attachments/content has been downloaded or not and if it is accessible to the user (e.g., if the user is authorized to download the content.). By way of example, the attachment/content module 207 interacts with the display module 209 to highlight or otherwise mark (e.g., with an icon, text label, etc.) files based on their download and/or authorization status. In other words, the display module 209 can determine to present a least one representation (e.g., a user interface representation) of a determination of a download and/or authorization status.

In one embodiment, the attachment/content module 207 also provides a mechanism for the user to request an attachment or content to which the user currently does not have access. For example, when a request is received for an attachment or content that requires approval for downloading, the attachment/content module sends a message to the attachment owner who can then decide whether to provide access to the requested attachment. If approval is provided, the user can download the file from the attachment owner. In addition or alternatively, the attachment owner may make the requested attachment or content available for download over a service 113 of the service platform 105.

In one embodiment, the approval and authorization to download may be indicated and stored over the network 107 in, for instance, the messages database 115 or other similar server. In other words, in one embodiment, the authorization is recorded on the server side to provide a central location for storing and verifying such authorization. In another embodiment, the authorization may be provided tacitly by making the attachment or content available for download in the conversation object. More specifically, the act of including the attachment in the conversation object represents the authorization. As a result, any device that has access to the conversation object also has authorization to download the attachments or content contained therein. In yet another embodiment, the authorization may be transmitted to a device as authorization token or key. The attachment/content module 207 can then verify whether a device is authorized to download a particular attachment or content by checking for the presence of the authorization token or key. It is contemplated that the attachment/content module 207 may use any other means for ensuring that only authorized devices can download attachments or content from the conversation object.

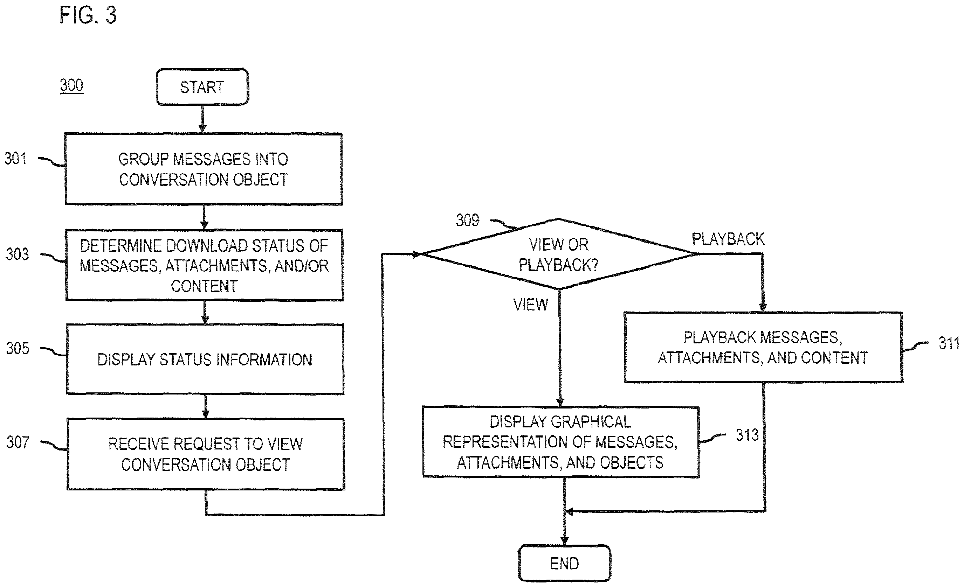

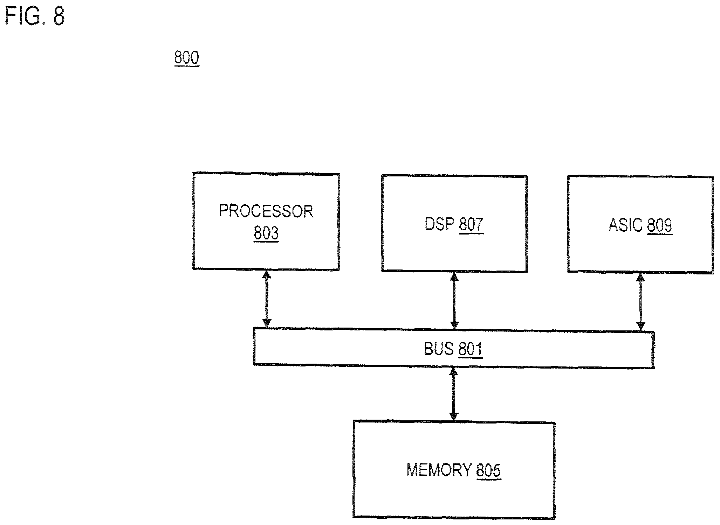

FIG. 3 is a diagram of a flowchart of a process for organizing messages and attachments as a conversation, according to one embodiment. In one embodiment, the conversation manager 103 performs the process 300 of FIG. 3 and is implemented in, for instance, a chip set including a processor and a memory as shown in FIG. 8. In step 301, the conversation manager 103 determines to group a plurality of message in a conversation object. In one embodiment, the conversation manager 103 also determines one or more attachments, one or more content, or a combination thereof associated with the plurality of messages. The conversation object then includes attachments, content, or a combination thereof associated with the messages. As discussed previously, the grouping can be based on a number of criteria including relationship to a common idea or thought, time, people, location, etc. It is contemplated that the user, service provider, network operator, and the like may specify the relative weighting of each of the criteria.

Once grouped, the conversation object can be accessed or displayed. For example, in step 303, the conversation manager 103 determines the download status of the messages, attachments, or content of the conversation object. The download status, for instance, indicates whether the user has already downloaded the respective message, attachment, or content from the appropriate source (e.g., item owner, service provider, network server, etc.). In addition, the download status may also include whether a particular user is authorized to download the content. For example, the content may be restricted only to certain users to protect the privacy of the content owner. Users who want to download the content must then seek approval or authorization from the content owner before performing the download. In another example, the content may be available only from a paid subscription service (e.g., a music service). Therefore, only subscribers to the service would be able to download the content.

The conversation manager 103 then initiates display of or otherwise determines to present the download status using, for instance, icons or other highlight to designate whether a particular item has already been downloaded (step 305). The map can also show whether a particular user is authorized to have access to the content. Based on this display, the user may request to download one or more of the messages, attachments, or content. The conversation manager 103 receives the request to access the conversation object (step 307) and then determines what type of display (e.g., viewing display or playback display) to present to the user (step 309). If the request specifies sequential playback, the conversation manager 103 initiates playback of each message in the conversation object according to a predetermined sequence (step 311). By way of example, the sequence may be based on a time (e.g., a creation time) corresponding to each of the messages, attachments, or content. More specifically, the display or presentation can cycle through each message and then display the people, time, location, etc. associated with the message (step 313).

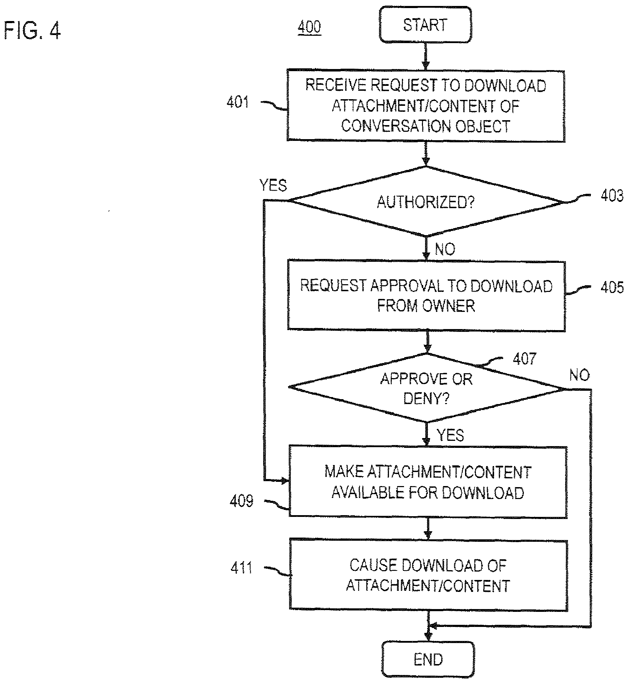

FIG. 4 is a diagram of a flowchart of a process for downloading attachments associated with messages organized as a conversation, according to one embodiment. In one embodiment, the conversation manager 103 performs the process 400 of FIG. 4 and is implemented in, for instance, a chip set including a processor and a memory as shown in FIG. 8. The process 400 of FIG. 4 assumes that the conversation object has already been created using, for instance, the process 300 of FIG. 3. In step 401, the conversation manager 103 receives a request to download an attachment or content specified in a conversation object. By way of example, the request may be received from a UE 101 associated with a user. The user, for instance, views a display or presentation generated in the process 300 of FIG. 3 to determine which attachments or content have not been downloaded previously. The user then makes a selection from one of the undownloaded files.

Next in step 403, the conversation manager 103 determines whether the user is authorized to download the requested attachment or content. If the user is not authorized, the conversation manager 103 determines to transmit a message to the content owner requesting approval or authorization for the user to download the requested attachment or content (step 405). In one embodiment, the message is transmitted via standard email protocols. In addition or alternatively, the message can be transmitted using a proprietary or custom protocol. It is contemplated that any messaging protocol (e.g., instant messaging protocol, short messaging service (SMS) protocol, etc.) may be used transmit the approval request message. After receiving the message, the attachment/content owner may either approve or deny the request (step 407).

If the content owner decides to approve the request, the conversation manager 103 makes the attachment or content available for download by the requesting user (step 409). For example, the conversation manager 103 may direct the user to download the attachment or content from the owner directly. In addition or alternatively, the owner may make the requested content available for download via a service 113 of the service platform 105 (e.g., Sharepoint or Ovi Services). In this case, the conversation manager 103, for instance, sends an automated response to the requesting user that the attachment or content is available for download at a public website. For example, the response may be a notification message that appears on the user's screen indicating that an update has been received and is now available for download. In response, the conversation manager 103 and/or the UE 101 of the requesting user initiates or causes the download of the attachment or content (step 411).

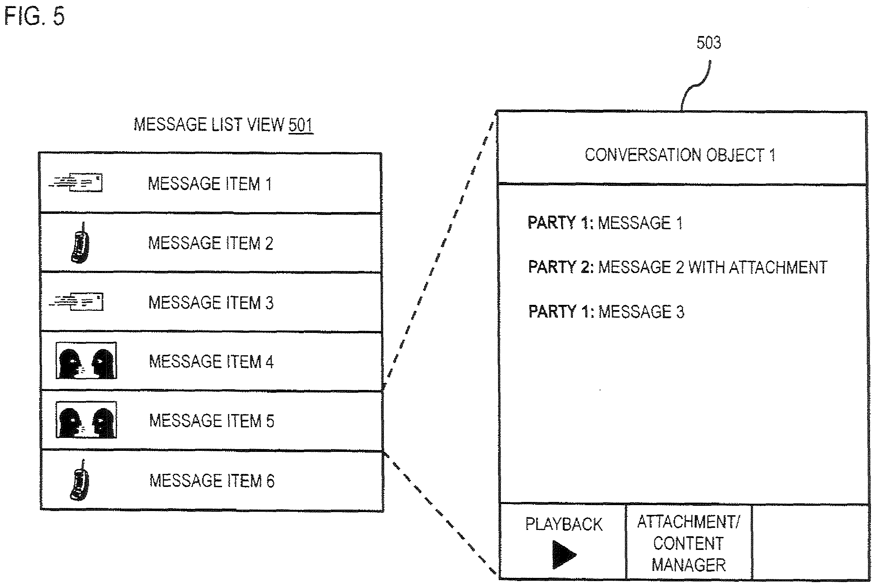

FIG. 5 is a diagram of a user interface for displaying a conversation object, according to one embodiment. As shown, the user interface of FIG. 5 depicts an example message list view 501 containing six message items of different messaging types. For example, message items 1 and 3 are email messages that have not been grouped in a conversation object; message items 2 and 6 are voice messages; and message items 4 and 5 are email messages that have been grouped in a conversation object. In one embodiment, each message item is identified by a message type icon and a text label. In the example of FIG. 5, a user selects the conversation object message item (e.g., message item 5) to invoke a conversation object screen 503. In one embodiment, selecting any one of the messages that have been grouped in a conversation object invokes the conversation object screen. The conversation object includes, for instance: (1) a conversation header, e.g., describing the title of the conversation object; (2) a conversation body, e.g., containing a list of the individual messages and attachments included in the conversation object; (3) a conversation player control, e.g., providing control of the playback of the individual messages within the object; and (4) a conversation attachment manager control, e.g., for invoking the attachment/content management control screen.

In certain embodiments, all or substantially all messages that have been grouped in a conversation object may be represented by a single message item in the message list view that corresponds to the conversation object. Selecting the conversation object will then call up the conversation object screen to display the individual messages within the object. In yet other embodiments, the message list view may present message items both individually and aggregated in a single conversation object.

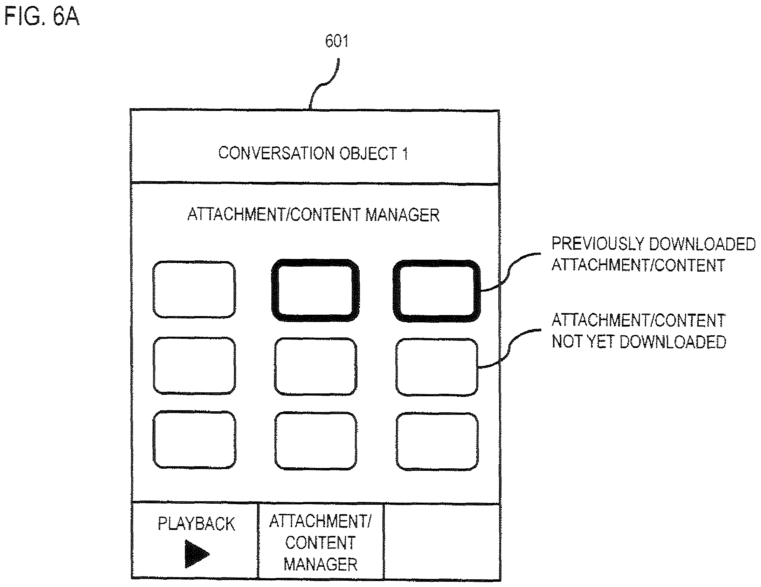

FIGs. 6A-6B are diagrams of user interfaces for managing attachments and content associated with messages organized as a conversation, according to various embodiments. FIG. 6A depicts an example user interface screen showing an attachment/content manager screen 601 of the conversation object. In one embodiment, the attachment/content manager screen 601 shows or presents graphical representation of all attachments (e.g., represented by the nine rectangles) associated with the conversation object. By way of example, rectangles with a heavy border indicate that the attachment has already been downloaded to the device. Rectangles with a light border indicate that the attachment has not yet been downloaded.

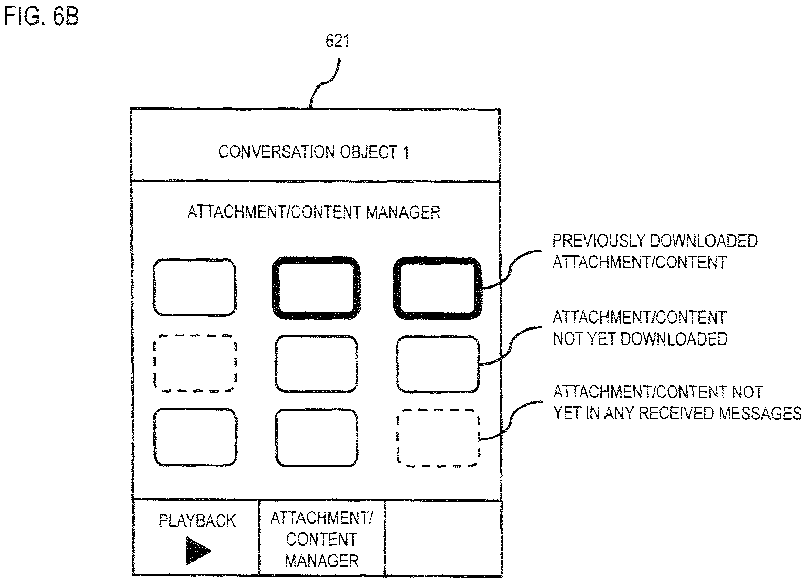

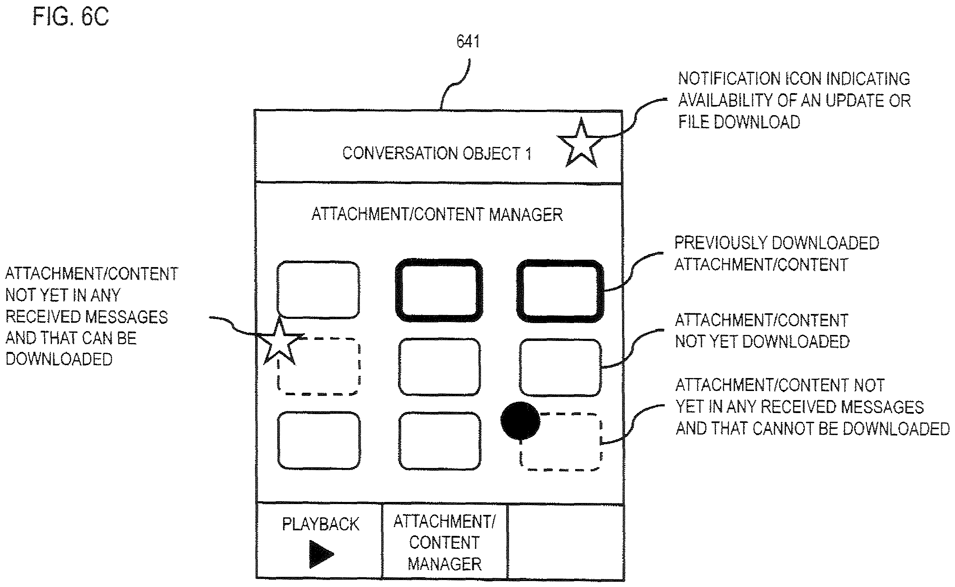

FIG. 6B depicts an example attachment/content manager screen 621 that depicts two attachments or content items that are not yet in any of the messages received at the device but that are recorded in the conversation object. These types of attachments or content are indicated by a rectangle with a dotted line. The user may, for instance, initiate a request to download the not yet received attachment or content according to the process of FIG. 5. FIG. 6C depicts an attachment/content manager screen 641 presenting the results of a request to download one of the attachments. For example, the user has requested to download one of the attachments or content associated with a rectangle with a dotted line. After receiving approval to download the file, the file is marked with a start to indicate that the attachment may now be downloaded. In addition, a notification icon is placed in the header to indicate that an attachment or content is available for download. If approval to download the file is denied, the file is marked with a black circle.

The processes described herein for organizing messages and attachments as a conversation may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

FIG. 7 illustrates a computer system 700 upon which an embodiment of the invention may be implemented. Although computer system 700 is depicted with respect to a particular device or equipment, it is contemplated that other devices or equipment (e.g., network elements, servers, etc.) within FIG. 7 can deploy the illustrated hardware and components of system 700. Computer system 700 is programmed (e.g., via computer program code or instructions) to organize messages and attachments as a conversation as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 700, or a portion thereof, constitutes a means for performing one or more steps of organizing messages and attachments as a conversation.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to organize messages and attachments as a conversation organizing messages and attachments as a conversation organizing messages and attachments as a conversation organizing messages and attachments as a conversation organizing messages and attachments as a conversation organizing messages and attachments as a conversation organizing messages and attachments as a conversation. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or other dynamic storage device, stores information including processor instructions for organizing messages and attachments as a conversation. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for organizing messages and attachments as a conversation, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 107 for organizing messages and attachments as a conversation.

The term computer-readable medium is used herein to refer to any medium that participates in providing information to processor 702, including instructions for execution. Such a medium may take many forms, including, but not limited to, non-volatile media, volatile media and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 720.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system 700 can be deployed in various configurations within other computer systems, e.g., host 782 and server 792.

At least some embodiments of the invention are related to the use of computer system 700 for implementing some or all of the techniques described herein. According to one embodiment of the invention, those techniques are performed by computer system 700 in response to processor 702 executing one or more sequences of one or more processor instructions contained in memory 704. Such instructions, also called computer instructions, software and program code, may be read into memory 704 from another computer-readable medium such as storage device 708 or network link 778. Execution of the sequences of instructions contained in memory 704 causes processor 702 to perform one or more of the method steps described herein. In alternative embodiments, hardware, such as ASIC 720, may be used in place of or in combination with software to implement the invention. Thus, embodiments of the invention are not limited to any specific combination of hardware and software, unless otherwise explicitly stated herein.

The signals transmitted over network link 778 and other networks through communications interface 770, carry information to and from computer system 700. Computer system 700 can send and receive information, including program code, through the networks 780, 790 among others, through network link 778 and communications interface 770. In an example using the Internet 790, a server host 792 transmits program code for a particular application, requested by a message sent from computer 700, through Internet 790, ISP equipment 784, local network 780 and communications interface 770. The received code may be executed by processor 702 as it is received, or may be stored in memory 704 or in storage device 708 or other non-volatile storage for later execution, or both. In this manner, computer system 700 may obtain application program code in the form of signals on a carrier wave.

Various forms of computer readable media may be involved in carrying one or more sequence of instructions or data or both to processor 702 for execution. For example, instructions and data may initially be carried on a magnetic disk of a remote computer such as host 782. The remote computer loads the instructions and data into its dynamic memory and sends the instructions and data over a telephone line using a modem. A modem local to the computer system 700 receives the instructions and data on a telephone line and uses an infra-red transmitter to convert the instructions and data to a signal on an infra-red carrier wave serving as the network link 778. An infrared detector serving as communications interface 770 receives the instructions and data carried in the infrared signal and places information representing the instructions and data onto bus 710. Bus 710 carries the information to memory 704 from which processor 702 retrieves and executes the instructions using some of the data sent with the instructions. The instructions and data received in memory 704 may optionally be stored on storage device 708, either before or after execution by the processor 702.

FIG. 8 illustrates a chip set 800 upon which an embodiment of the invention may be implemented. Chip set 800 is programmed to organize messages and attachments as a conversation as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip. Chip set 800, or a portion thereof, constitutes a means for performing one or more steps of organizing messages and attachments as a conversation.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to organize messages and attachments as a conversation. The memory 805 also stores the data associated with or generated by the execution of the inventive steps.

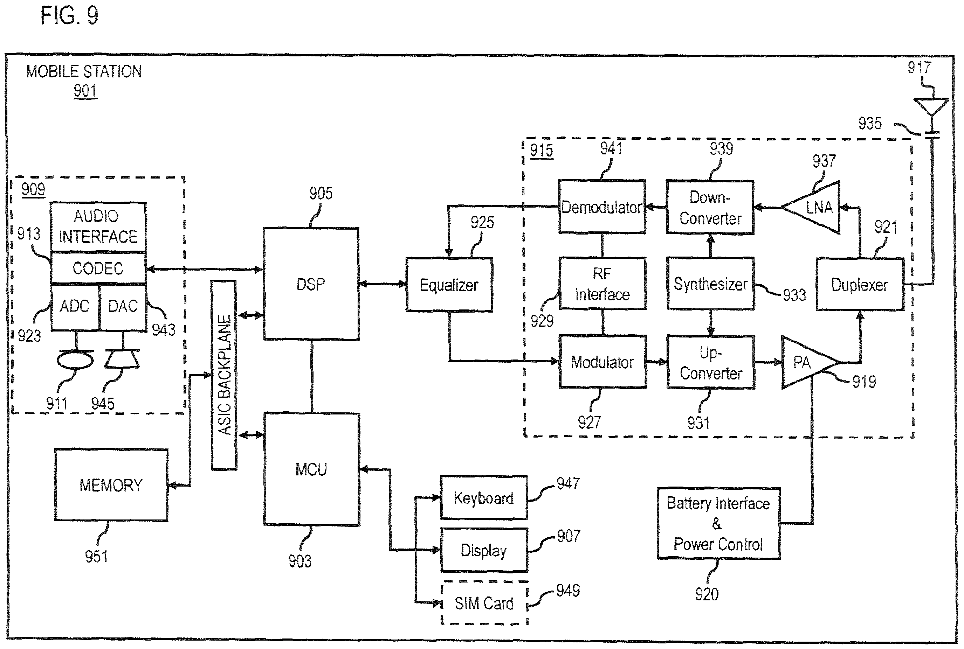

FIG. 9 is a diagram of exemplary components of a mobile terminal (e.g., handset) for communications, which is capable of operating in the system of FIG. 1, according to one embodiment. In some embodiments, mobile terminal 900, or a portion thereof, constitutes a means for performing one or more steps of organizing messages and attachments as a conversation. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile terminal functions that perform or support the steps of organizing messages and attachments as a conversation. The display 9 includes display circuitry configured to display at least a portion of a user interface of the mobile terminal (e.g., mobile telephone). Additionally, the display 907 and display circuitry are configured to facilitate user control of at least some functions of the mobile terminal. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile terminal 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile terminal 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile terminal 901 to organize messages and attachments as a conversation organizing messages and attachments as a conversation. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the terminal. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile terminal 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable storage medium known in the art. The memory device 951 may be, but not limited to, a single memory, CD, DVD, ROM, RAM, EEPROM, optical storage, or any other non-volatile storage medium capable of storing digital data.

An optionally incorporated SIM card 949 carries, for instance, important information, such as the cellular phone number, the carrier supplying service, subscription details, and security information. The SIM card 949 serves primarily to identify the mobile terminal 901 on a radio network. The card 949 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
determining (301), by a conversation manager (103), to group a plurality of messages in a conversation object, wherein the conversation object serves as a central index to all content and attachments exchanged as part of a conversation, wherein the conversation object comprises:
a conversation header describing a title of the conversation object;
a conversation body comprising a list of the plurality of messages and one or more attachments, one or more content, or a combination thereof associated with the plurality of messages;
a conversation player control for providing control of playback of the plurality of messages; and
a conversation attachment manager control for providing unified access via the central index to all attachments and content associated with the conversation object and for invoking an attachment/content management control screen that is configured to present graphical representation of all attachments associated with the conversation object via a user interface screen of a device for selection by a user of the device;
determining, by the conversation manager (103), the one or more attachments, one or more content, or a combination thereof associated with the plurality of messages;
determining, by the conversation manager (103), to associate the one or more attachments, the one or more content, or a combination thereof with the conversation object, wherein at least one of the plurality of messages, the one or more attachments, the one or more content, or a combination thereof is stored on another device;
initiating, by the conversation manager (103), a display of the conversation object via the user interface screen of the device;
determining (303) whether the device has downloaded the at least one of the plurality of messages, the one or more attachments, the one or more content, or a combination thereof from the other device; and
determining (305) to present a representation of a download status of the at least one of the plurality of messages, the one or more attachments, the one or more content, or a combination thereof from the other device .

2. A method according to claim 1, further comprising:
receiving over a network a request (307), from the device, to access the conversation object; and
in response to the request, determining to cause, at least in part, playback (311) of at least one of the plurality of messages, the one or more attachments, the one or more content, or a combination thereof,

3. A method of claim 2, wherein the playback is in a sequential order.

4. A method of claim 3, wherein the sequential order is according to respective times associated with the at least one of the plurality of messages, the one or more attachments, the one or more content, or a combination thereof.

5. A method according to any one of claims 2-4, wherein the conversation object includes a plurality of branches, the method further comprising:
determining at least one of the plurality of branches associated with the device;
determining to cause, at least in part, playback of at least one of the plurality of message, the one or more attachments, the one or more content, or a combination thereof associated with the at least one of the plurality of branches.

6. A method according to any one of claims 1-5, further comprising:
determining (313) to present a graphical representation of at least one of the plurality of messages, the one or more attachments, the one or more content, or a combination thereof.

7. A method according to claim 2 for any claim dependent thereof, wherein the request is initiated by requesting to view any one of the plurality of messages, the one or more attachments, the one or more content, or a combination thereof.

8. A method of claim 1, further comprising:
determining whether the device has an authorization to download the at least one of the plurality of messages, the one or more attachments, the one or more content, or a combination thereof; and
determining to present a representation of the authorization determination.

9. A method according to any one of claims 1-8, further comprising:
receiving (401) another request, from the device, to download the at least one of the plurality of messages, the one or more attachments, the one or more content, or a combination thereof from another device;
in response to the other request, determining to transmit (405) a message seeking approval for the download from the other device;
receiving (407) either a confirmation or a denial of the approval from the other device; and
determining (411) to download the at least one of the plurality of the messages, the one or more attachments, the one or more content, or a combination thereof if the confirmation is received.

10. An apparatus comprising means for performing a method of any one of claims 1-9.

11. An apparatus of claim 10, wherein the apparatus is a mobile phone (901) further comprising:
user interface circuitry and user interface software configured to facilitate user control of at least some functions of the mobile phone through use of a display (907) and configured to respond to user input; and
a display (907) and display circuitry configured to display at least a portion of a user interface of the mobile phone, the display and display circuitry configured to facilitate user control of at least some functions of the mobile phone.

## Patentansprüche

1. Verfahren, umfassend:
Bestimmen (301), durch einen Konversationsmanager (103), um mehrere Nachrichten in einem Konversationsobjekt zu gruppieren, wobei das Konversationsobjekt als zentraler Index für alle Inhalte und Anhänge dient, die als Teil einer Konversation ausgetauscht werden, wobei das Konversationsobjekt umfasst:
einen Konversationsheader, der einen Titel des Konversationsobjekts beschreibt;
einen Konversationskörper, der eine Liste der mehreren Nachrichten und eines oder mehrerer Anhänge, eines oder mehrerer Inhalte oder einer Kombination davon, assoziiert mit den mehreren Nachrichten, umfasst;
eine Konversationswiedergabe-Steuerung zur Bereitstellung einer Steuerung der Wiedergabe der mehreren Nachrichten; und
eine Konversationsanhangsmanager-Steuerung zur Bereitstellung eines vereinigten Zugriffs über den zentralen Index auf alle Anhänge und Inhalte, die mit dem Konversationsobjekt assoziiert sind, und zum Aufruf eines Anhangs/Inhaltemanagement-Steuerbildschirms, der ausgelegt ist, eine grafische Darstellung aller Anhänge, die mit dem Konversationsobjekt assoziiert sind, über einen Benutzerschnittstellenbildschirm einer Vorrichtung zur Auswahl durch einen Benutzer der Vorrichtung zu liefern;
Bestimmen, durch den Konversationsmanager (103), des einen oder der mehreren Anhänge, des einen oder der mehreren Inhalte oder einer Kombination davon, assoziiert mit den mehreren Nachrichten;
Bestimmen, durch den Konversationsmanager (103), um den einen oder die mehreren Anhänge, den einen oder die mehreren Inhalte oder eine Kombination davon mit dem Konversationsobjekt zu assoziieren, wobei mindestens eine von den mehreren Nachrichten, einer von dem einen oder den mehreren Anhängen, einer von dem einen oder den mehreren Inhalten oder eine Kombination davon auf einer anderen Vorrichtung gespeichert wird;
Initiieren, durch den Konversationsmanager (103), einer Anzeige des Konversationsobjekts über den Benutzerschnittstellenbildschirm der Vorrichtung;
Bestimmen (303), ob die Vorrichtung mindestens die eine von den mehren Nachrichten, den einen oder die mehreren Anhänge, den einen oder die mehreren Inhalte oder eine Kombination davon von der anderen Vorrichtung heruntergeladen hat; und
Bestimmen (305), um eine Darstellung eines Herunterlade-Status mindestens der einen von den mehreren Nachrichten, des einen oder der mehreren Anhänge, des einen oder der mehreren Inhalte oder einer Kombination davon von der anderen Vorrichtung zu liefern.

2. Verfahren nach Anspruch 1, ferner umfassend:
Empfangen, über ein Netz, einer Anforderung (307) von der Vorrichtung, um auf das Konversationsobjekt zuzugreifen; und
ansprechend auf die Anforderung, Bestimmen, um mindestens teilweise eine Wiedergabe (311) mindestens einer der mehreren Nachrichten, des einen oder der mehreren Anhänge, des einen oder der mehreren Inhalte oder einer Kombination davon zu bewirken.

3. Verfahren nach Anspruch 2,
wobei die Wiedergabe in sequentieller Reihenfolge erfolgt.

4. Verfahren nach Anspruch 3,
wobei die sequentielle Reihenfolge gemäß den jeweiligen Zeiten erfolgt, die mit der mindestens einen von den mehreren Nachrichten, des einen oder der mehreren Anhänge, des einen oder der mehreren Inhalte oder einer Kombination davon assoziiert sind.

5. Verfahren nach einem der Ansprüche 2 bis 4,
wobei das Konversationsobjekt mehrere Verzweigungen aufweist, wobei das Verfahren ferner umfasst:
Bestimmen mindestens einer von den mehreren Verzweigungen, die mit der Vorrichtung assoziiert sind;
Bestimmen, um mindestens teilweise eine Wiedergabe mindestens einer von der mehreren Nachrichten, des einen oder der mehreren Anhänge, des einen oder der mehreren Inhalte oder einer Kombination davon zu bewirken, die mit der mindestens einen von den mehreren Verzweigungen assoziiert sind.

6. Verfahren nach einem der Ansprüche 1 bis 5, ferner umfassend:
Bestimmen (313), um eine grafische Darstellung mindestens einer von den mehreren Nachrichten, des einen oder der mehreren Anhänge, des einen oder der mehreren Inhalte oder einer Kombination davon zu liefern.

7. Verfahren nach Anspruch 2 oder irgendeines davon abhängigen Anspruchs,
wobei die Anforderung initiiert wird, indem angefordert wird, irgendeine der mehreren Nachrichten, irgendeinen des einen oder der mehreren Anhänge, irgendeinen des einen oder der mehreren Inhalte oder eine Kombination davon anzusehen.

8. Verfahren nach Anspruch 1, ferner umfassend:
Bestimmen, ob die Vorrichtung eine Autorisierung besitzt, um mindestens die eine von den mehreren Nachrichten, den einen oder die mehreren Anhänge, den einen oder die mehreren Inhalte oder eine Kombination davon herunterzuladen; und
Bestimmen, um eine Darstellung der Autorisierungsbestimmung zu liefern.

9. Verfahren nach einem der Ansprüche 1 bis 8, ferner umfassend:
Empfangen (401) einer weiteren Anforderung von der Vorrichtung, um mindestens die eine von den mehreren Nachrichten, den einen oder die mehreren Anhänge, den einen oder die mehreren Inhalte oder eine Kombination davon von einer anderen Vorrichtung herunterzuladen;
ansprechend auf die andere Anforderung, Bestimmen, um eine Nachricht zu übertragen (405), die um eine Genehmigung für das Herunterladen von der anderen Vorrichtung ansucht;
Empfangen (407) entweder einer Bestätigung oder einer Ablehnung der Genehmigung von der anderen Vorrichtung; und
Bestimmen (411), um mindestens die eine von den mehreren Nachrichten, den einen oder die mehreren Anhänge, den einen oder die mehreren Inhalte oder eine Kombination davon herunterzuladen, wenn die Bestätigung empfangen wird.

10. Vorrichtung, umfassend Mittel zum Vornehmen eines Verfahrens nach einem der Ansprüche 1 bis 9.

11. Vorrichtung nach Anspruch 10,
wobei die Vorrichtung ein Mobiltelefon (901) ist, ferner umfassend:
Benutzerschnittstellenschaltungen und Benutzerschnittstellen-Software, die ausgelegt sind, eine Benutzersteuerung mindestens einiger Funktionen des Mobiltelefons durch die Verwendung einer Anzeige (907) zu erleichtern, und ausgelegt sind, auf eine Benutzereingabe anzusprechen; und
eine Anzeige (907) und Anzeigeschaltungen, die ausgelegt sind, mindestens einen Teil einer Benutzerschnittstelle des Mobiltelefons anzuzeigen, wobei die Anzeige und Anzeigeschaltungen ausgelegt sind, eine Benutzersteuerung mindestens einiger Funktionen des Mobiltelefons zu erleichtern.

## Revendications

1. Procédé comprenant :
la détermination (301), au moyen d'un gestionnaire de conversation (103), de regrouper une pluralité de messages dans un objet de conversation, dans lequel l'objet de conversation fait office d'index central pour tout le contenu et toutes les pièces jointes échangés en tant que partie d'une conversation, dans lequel l'objet de conversation comprend :
un en-tête de conversation décrivant un titre de l'objet de conversation ;
un corps de conversation comprenant une liste de la pluralité de messages et une ou plusieurs pièces jointes, un ou plusieurs contenus ou une combinaison de ces derniers associés à la pluralité de messages ;
une commande de lecteur de conversation pour fournir une commande de lecture de la pluralité de messages ; et
une commande de gestionnaire de pièce jointe de conversation pour fournir un accès unifié par le biais de l'index central à toutes les pièces jointes et à tout le contenu associés à l'objet de conversation et pour invoquer un écran de commande de gestion de pièces jointes/contenu qui est configuré pour présenter une représentation graphique de toutes les pièces jointes associées à l'objet de conversation par le biais d'un écran d'interface utilisateur d'un dispositif pour une sélection par un utilisateur du dispositif ;
la détermination, au moyen du gestionnaire de conversation (103), de la ou des pièces jointes, du ou des contenus, ou d'une combinaison de ces derniers associés à la pluralité de messages ;
la détermination, au moyen du gestionnaire de conversation (103), d'associer la ou les pièces jointes, le ou les contenus, ou une combinaison de ces derniers, à l'objet de conversation, dans lequel au moins un message de la pluralité de messages, la ou les pièces jointes, le ou les contenus, ou une combinaison de ces derniers sont stockés sur un autre dispositif ;
le déclenchement, au moyen du gestionnaire de conversation (103), d'un affichage de l'objet de conversation par le biais de l'écran d'interface utilisateur du dispositif ;
la détermination (303) que le dispositif a téléchargé le ou les messages de la pluralité de messages, la ou les pièces jointes, le ou les contenus ou une combinaison de ces derniers, à partir de l'autre dispositif ; et
la détermination (305) de présenter une représentation d'un état de téléchargement du ou des messages de la pluralité de messages, de la ou des pièces jointes, du ou des contenus ou d'une combinaison de ces derniers, à partir de l'autre dispositif.

2. Procédé selon la revendication 1, comprenant en outre :
la réception, sur un réseau, d'une demande (307), du dispositif, d'avoir accès à l'objet de conversation ; et
en réponse à la demande, la détermination de provoquer, au moins en partie, une lecture (311) d'au moins un message de la pluralité de messages, de la ou des pièces jointes, du ou des contenus ou d'une combinaison de ces derniers.

3. Procédé selon la revendication 2, dans lequel la lecture se fait dans un ordre séquentiel.

4. Procédé selon la revendication 3, dans lequel l'ordre séquentiel est fonction de moments respectifs associés au ou aux messages de la pluralité de messages, à la ou aux pièces jointes, au ou aux contenus ou à une combinaison de ces derniers.

5. Procédé selon l'une quelconque des revendications 2 à 4, dans lequel l'objet de conversation comprend une pluralité de branches, le procédé comprenant en outre :
la détermination d'au moins une branche de la pluralité de branches associées au dispositif ;
la détermination de provoquer, au moins en partie, une lecture d'au moins un message de la pluralité de messages, de la ou des pièces jointes, du ou des contenus ou d'une combinaison de ces derniers associés à la ou à des branches de la pluralité de branches.

6. Procédé selon l'une quelconque des revendications 1 à 5, comprenant en outre :
la détermination (313) de présenter une représentation graphique d'au moins un message de la pluralité de messages, de la ou des pièces jointes, du ou des contenus ou d'une combinaison de ces derniers.

7. Procédé selon la revendication 2 ou n'importe quelle revendication dépendante de cette dernière, dans lequel la demande est initiée en demandant de voir un message quelconque de la pluralité de messages, la ou les pièces jointes, le ou les contenus ou une combinaison de ces derniers.

8. Procédé selon la revendication 1, comprenant en outre :
la détermination que le dispositif a une autorisation de télécharger le ou les messages de la pluralité de messages, la ou les pièces jointes, le ou les contenus ou une combinaison de ces derniers ; et
la détermination de présenter une représentation de la détermination d'autorisation.

9. Procédé selon l'une quelconque des revendications 1 à 8, comprenant en outre :
la réception (401) d'une autre demande, en provenance du dispositif, de télécharger le ou les messages de la pluralité de messages, la ou les pièces jointes, le ou les contenus ou une combinaison de ces derniers à partir d'un autre dispositif ;
en réponse à l'autre demande, la détermination de transmettre (405) un message demandant l'approbation du téléchargement à partir de l'autre dispositif ;
la réception (407) soit d'une confirmation, soit d'un refus de l'approbation en provenance de l'autre dispositif ; et
la détermination (411) de télécharger le ou les messages de la pluralité de messages, la ou les pièces jointes, le ou les contenus ou une combinaison de ces derniers si la confirmation est reçue.

10. Appareil comprenant des moyens pour réaliser un procédé selon l'une quelconque des revendications 1 à 9.

11. Appareil selon la revendication 10, dans lequel l'appareil est un téléphone mobile (901) comprenant en outre :
un ensemble de circuits d'interface utilisateur et un logiciel d'interface utilisateur configurés pour faciliter une commande d'utilisateur d'au moins certaines fonctions du téléphone mobile par une utilisation d'un dispositif d'affichage (907) et configurés pour répondre à une entrée d'utilisateur ; et
un dispositif d'affichage (907) et un ensemble de circuits d'affichage configurés pour afficher au moins une partie d'une interface utilisateur du téléphone mobile, le dispositif d'affichage et l'ensemble de circuits d'affichage étant configurés pour faciliter une commande d'utilisateur d'au moins certaines fonctions du téléphone mobile.
